# EUROPEAN PATENT APPLICATION

(11) **EP 2 803 275 A1**
(43) Date of publication of application: **19.11.2014**
(21) Application number: 13167928.4
(22) Date of filing: 15.05.2013
(51) Int. Cl.: A23K 1/00, A23K 1/18

(54) **A process for supplementary feeding of animals, a process for adjusting the milk composition of a mammal, and uses of an Euglenida biomass**

(71) Applicant: Friesland Brands B.V., 3818 LE Amersfoort (NL)
(72) Inventor: Toebes, Antoinette Henriette Wilhelmina, 3818 LE Amersfoort (NL); Eisner, Matthias Dominik, 3818 LE Amersfoort (NL); Fischer, Sabine, 3818 LE Amersfoort (NL)
(74) Representative: Jansen, Cornelis Marinus

(57) **Abstract**

The present invention is directed to a process for supplementary feeding an animal using an *Euglenida* biomass. In addition, the present invention relates to a process for adjusting the milk composition of a mammal using an *Euglenida* biomass. Moreover, the present invention relates to uses of *Euglenida* biomasses.

## Description

The present invention is directed to a process for supplementary feeding an animal using an *Euglenida* biomass. In addition, the present invention relates to a process for adjusting the milk composition of a mammal using an *Euglenida* biomass. Moreover, the present invention relates to uses of *Euglenida* biomasses.

In the non-prepublished Dutch patent application 2007788, filed on November 15, 2011, and in the non-prepublished International patent application PCT/NL2012/050809, filed on November 15, 2012, processes for the recovery of *Euglenida* biomass from a culture system are described, together with general uses of such biomass. In these two patent applications of which the contents are incorporated herein for the production of the biomass that is used in the invention described in present description, *Euglenida* are grown either under autotrophic, or, preferably, under heterotrophic (dark) or mixotrophic conditions.

The present invention elaborates on the subject-matter of both mentioned patent applications.

In a first aspect, the invention is directed to a process for supplementary feeding of animals, comprising the offering for oral intake or the oral application of an amount of *Euglenida* biomass by a caretaker to an animal. Preferably, the animal is intended for the production of milk, or is a ruminant and especially a ruminant intended for the production of milk.

In a second aspect, the invention is directed to a process for adjusting the milk composition of a mammal, comprising consuming of an amount of *Euglenida* biomass by the mammal. Preferably, the mammal is an animal intended for the production of milk. In another embodiment, the mammal may be a lactating animal or human.

In these two aspects of the invention, the *Euglenida* biomass is used as a valuable source of nutrients intended to give beneficial effects in the living organisms using it.

For example, the *Euglenida* biomass may be used in these two aspects with the intention to improve the composition of milk, and more specifically give milk having an increased or improved unsaturated fatty acids content, and especially with the intention of not negatively affecting the trans fatty acids content or the milk yield. In addition, the *Euglenida* biomass may also be used in such a way that beneficial nutrients are introduced into or optimized or otherwise adjusted in milk, but for example also in the meat or in eggs or other products made by or otherwise originating from the animal. Examples of beneficial nutrients are, e. *g.* carbohydrates (in particular paramylon), antioxidants, vitamins and/or minerals. Moreover, the *Euglenida* biomass may be taken up to improve the well-being of the consuming animal.

Further, the *Euglenida* biomass may be purified or fractionated and used in such form.

Under *Euglenida* biomass it is understood the biomass out of living or dead *Euglenida* cells, with or without mucus layer, and any other components attached or bound to or entrapped within the cells and/or mucus layers. Accordingly, *Euglenida* biomass encompasses not only *Euglenida* but also extracellular mucus layers produced thereby (EPS, extracellular polysaccharide). In general, about 10% of EPS is detached from cells.

Under the caretaker it is understood anyone providing feed to the cow by whatever means.

The amounts of *Euglenida* biomass used in processes of the invention depend on the intention of the use, and may vary between small amounts up to the total daily food uptake. Preferably, however, the amount used is 0.05-20, preferably 0.1-10, and even more preferably 0.3-5 wt.% drawn to the total dry mass amount of the oral, daily uptake of food and feed.

In another aspect, the invention relates to a method to reduce methane emission during milk production by cows. That is, the invention is also directed to the use of *Euglenida* biomass in an amount of at least 0.05 wt.% drawn to the total dry weight daily consumable amount of food or feed in a ruminant for reducing the methane emission of said ruminant. The term "reducing" is relative to the average methane emission of the same animal when not being fed *Euglenida* biomass.

Particularly, the invention is also directed to the use of *Euglenida* biomass in an amount of at least 0.05 wt.% drawn to the total dry weight daily consumable amount of food or feed for a milk producing animal without reducing the milk production by said animal. "Without reducing the milk production" means in this light that the (average daily) milk production does not differ, at least not significantly, from the (average daily) milk production of the same animal when not being fed *Euglenida* biomass. Preferably, the milk production is increased, which includes both increased production in volume (such as liters per day) and increased content of nutrients in milk, such as fat, fatty acids, proteins, minerals.

In a further aspect, the invention is directed to the use of *Euglenida* biomass in an amount of at least 0.05 wt.% drawn to the total dry weight daily consumable amount of food or feed for a milk producing animal, to increase or improve the fatty acid content of the milk of said animal.

In yet another aspect, the invention is directed to the use of *Euglenida* biomass in an amount of at least 0.05 wt.% drawn to the total dry weight daily consumable amount of food or feed for a milk producing animal, to increase the content of vitamins or antioxidants or minerals in the milk of said animal.

In one of its aims, the present invention provides a simple and hence cost effective method of adjusting (including improving, increasing and lowering), and preferably improving, the composition of milk by adding cultured *Euglenida* to feed, and especially *Euglena,* with the aim of adjusting, improving, increasing or lowering total or specific unsaturated fatty acids in milk. Such milk can additionally be used to prepare products based thereon, such as cream, cheese butter, yoghurt, desserts, and ice-cream.

"Adjusting the composition of milk" depends on the composition of the *Euglenida* biomass, but as well on the composition of the partially replaced food components and the food pattern used before the supplementary feeding process of the present invention. Dependent on these concepts, the skilled person will be able to provide the advantageous effects of the present invention. In some instances, it may mean providing a higher content of unsaturated fatty acids, and/or total ω-3 fatty acids, and/or specific fatty acids absent or low in milk in general. In addition, the present invention relates to an *Euglenida* additive for mammals, including humans and more specifically for dairy cattle and essentially for dairy cows.

In this light, it is noted that in regular, natural bovine milk over 70 wt.% of the total fat comprises saturated fatty acids, whereas unsaturated fatty acids constitute less than 30 wt.% of the milk fat. Unsaturated fatty acids, especially long-chain polyunsaturated fatty acids (LC-PUFA) are known to lower the risk of cardiovascular diseases. Prior art learns that unsaturated fatty acids in bovine milk mainly originates from feed. A known method is to add lipids to animal diets in order to increase the level of unsaturated fatty acids in milk in total of for specific fatty acids. However, fatty acids consumed by ruminants are exposed to an extensive microbial population in the rumen, which transforms all or part of the added unsaturated fatty acids predominantly into saturated fatty acids and trans unsaturated fatty acids by biohydrogenation. Trans-fatty acids are associated with an increased risk with regard to coronary heart disease. For this reason plant and animal lipids must be either limited in amount or protected against ruminal fermentation and digestion.

It is believed that the present invention provides the possibility to limit the total trans fatty acid content in milk, typically ranging from 3 to 7 g/100 g total fatty acids, to less than 4.0 g/100g total fatty acids, preferably less than 3.5 g and more preferably less than 3g and yet more preferably less than 2.9 g/100 g total fatty acids. With the term "total trans fatty acid content", it is meant the sum of C_{16:1} trans 9 + C_{18:1} trans (4+5+6+7+8+9+10) + C_{18:2} trans (6+10).

*Euglenida* biomass as used in the present application may be produced as mentioned herein-above while using the methods described in NL-2007788 and in PCT/NL2012/050809. In a preferred embodiment, the flocculated *Euglenida* biomass described therein is used.

An advantage of flocculated *Euglenida* used as a feed additive in ruminants feed was found in that *Euglenida,* enclosed by a protein pellicle rather than a cellulosic cell wall, and even more so *Euglenida* with an additional mucus layer which is formed following a period of stress, have shown rumen bypass properties (see Example 1). Therefore active substances like PUFAs (poly unsaturated fatty acids) are released no sooner than in the small intestine. Feeding of other algae species is ineffective for the reason that the cellulosic cell wall is well digested in the rumen and lipids are released early. Furthermore, by passing the rumen undigested *Eugelenida* reduce enteric methane emission by ruminants.

In yet another aspect, the present invention relates to the use of proteins, lipids, carbohydrates recovered from the *Euglenida,* in any form or at various feed applications. Methods for the recovery of such components are known in the art, for example, by pressing for the recovery of oils. It is well known that the *Euglenida,* and especially *Euglena,* are capable of producing all kinds of metabolites such as oils, proteins, amino acids, phosphorylated compounds, carbohydrates, glycans, glucans and exopolysaccharides. A comprehensive review of the metabolism of *Euglena* and its metabolites can, for example, be found in D.E. Buetow, Editor, The Biology of Euglena Vol. 2, Academic Press, New York (1968). The amino acid composition of bulk protein of *Euglena* grown in waste water is reported in Y. Kott and A. Wachs, Appl. Microbiol. (1964), Vol. 12, No. 4, 292-294. *Euglena* is capable of producing these metabolites not only under autotrophic (light/inorganic carbon) conditions, but also under heterotrophic (dark/ organic carbon) and mixotrophic (light/organic carbon) conditions.

*Euglenida* belong to the phylum Euglenozoa consisting of mostly unicellular aquatic algae. The class of *Euglenida* (also referred to as *Euglenoidea, Euglenids* and *Euglenophytes)* comprises for instance the orders *Euglenales, Eutreptiella, Rhabdomonas, Colacium, Discoplatis, Lepocinclis, Strombomonas, Trachelomonas, Monomorphina, Cryptoglena* and *Phacus.* The family of the *Euglena* forms a preferred family of organisms to be used in the present invention. Hence, preferably, the invention is directed to feeding *Euglena,* such as *Euglena anabaena,* and *Euglena mutabilis,* and most preferably of the species *Euglena gracilis.*

The genus *Euglena* is the most studied species of the *Euglenida* and is widely used in various applications, such as waste-water treatment or biodiesel production.

In accordance with the present invention, microorganisms of the class *Euglenida,* and especially of the family *Euglena,* are cultured in a culture medium under autotrophic, but preferably under heterotrophic and/or mixotrophic conditions. The heterotrophic and mixotrophic conditions at least require the presence of an organic carbon source and optionally an inorganic carbon source; contrary to heterotrophic conditions, mixotrophic conditions require the presence of light. The cell composition can be directed by choosing different culture conditions such as culture media, or by applying stresses or a combination enabling one to direct metabolism towards a target metabolite or multiple metabolites. Suitable stress conditions that can be used are biotic, such as infection or elicitation with a pathogen extract, or abiotic such as physical (*e.g.* temperature, pressure *etc.),* nutrient and oxygen limitation. Preferred stress conditions are nutrient limitation and more preferably nitrogen limitation (ammonia salts and ammonium salts (preferred), nitrate salts, amino acids/protein) or limitation of a phosphorous (like KH₂PO₄) source, or both.

More preferred stress conditions encompass a period of, say, 5 days of anoxia following the optimal culturing procedure resulting in an increased lipid content from approximately 10 wt.% to over 50 wt.% at the expense of storage carbohydrates (paramylon). The temperature at which this incubation period is performed very much determines the fatty acid composition of the biomass. See in this light Table 1, herein-below.

At the end of the exponential growth phase *Euglena* biomass starts to autoflocculate as nitrogen becomes limited (see the mentioned NL 2007788). Following flocculation the microorganisms are harvested, and can be *used per se* as a feed source. For instance, these nutrient-rich microorganisms can be used as feed for animals, such as mammals, birds, fish, in particular, for fish, chicken, pigs, horses or cattle. In a preferred embodiment, the flocculated microorganisms are used as feed or feed additive for ruminants and more specifically for cows.

**Table 1: Fatty acid composition of Euglena gracilis following a stress period of 5 days anoxia at 27°C or 25°C**

| Fatty Acid | *Euglena gracilis* 27°C | *Euglena gracilis* 25°C |
|---|---|---|
| C4:0 | | |
| C8:0 | <0.1 | 0.1 |
| C10:0 | <0.1 | 0.6 |
| C11:0 | 0.3 | 0.7 |
| C12:0 | 1 | 3.2 |
| C13:0 | 6.8 | 12.9 |
| C14:0 | 6.3 | 19.7 |
| C15:0 | 2.6 | 4.5 |
| C15:1w5cis | | |
| C16:0 | 1 | 3.2 |
| C16:1w7cis | 0.1 | 0.4 |
| C17:0 | 0.5 | 0.9 |
| C17:1w7cis | 0.3 | 0.7 |
| C18:0 | 0.3 | 0.7 |
| C18:1w9cis | 0.2 | 1.2 |
| C18:1w7cis | | 0.2 |
| C18:1w6cis | | |
| (LA) | | |
| C18:3w3cis | 0.1 | <0.1 |
| (ALA) | | |
| C18:4w3cis | | |
| C20:1w9cis | | |
| C20:2w6cis | 0.2 | 0.4 |
| C20:3w6cis | | 0.6 |
| C20:3w3cis | | 0.4 |
| C20:4w6cis | 0.4 | 3.4 |
| (AA) | | |
| C20:5w3cis | 15.1 | |
| (EPA) | | |
| C22:0 | 1.2 | 0.9 |
| C22:1w9cis | 0.3 | |
| C22:2w6cis | | |
| C22:3w3cis | | 1.3 |
| C22:4w6cis | 20.8 | 11.4 |
| C22:5w6cis | 0.2 | 0.1 |
| C22:5w3cis | 23.2 | |
| (DPA) | | |
| C22:6w3cis | 0.1 | <0.1 |
| (DHA) | | |
| C24:0 | | 7.2 |
| C24:1w9cis | | |
| UFA | 18.8 | 45.2 |
| SAFA | 20.1 | 47.6 |
| MUFA | 0.7 | 1.8 |
| PUFA | 60.4 | 5.5 |
| omega-3 | 38.5 | 0.6 |
| omega-6 | 21.9 | 4.6 |
| ω-6:ω-3 | 0.57 | 7.7 |
| Trans | 0 | 0 |
| Total fat (%) | 51 | 52.5 |

Herein, UFA means "unknown fatty acid", SAFA "saturated fatty acid", MUFA "mono unsaturated fatty acid", PUFA "poly unsaturated fatty acid". The same abbreviations are used in the further tables below.

The proof of principle of the present invention with regard to the ability of *Euglena gracilis* biomass to pass the rumen intact is shown in the following, non-limiting examples. The percentages mentioned throughout herein-below and throughout the text are percentages by weight, unless otherwise specifically indicated.

### Example 1

In this working example biomass of *Euglena gracilis* was tested for its ability to resist ruminal metabolism. Two types of biomass were tested, the so called non-stressed (type 1) and stressed (type 2) biomass. The stressed biomass was produced by subjecting heterotrophically grown cells to an additional 5 day anoxia incubation period resulting in a shift in biomass composition from carbohydrates to lipids (Table 2). Furthermore, applying stress induces cyst formation accompanied by the production of a thick, protective, exopolysaccharide (EPS) mucus layer.

Table 2: Composition of type 1 (non-stressed) and type 2 (anoxia stressed) biomass of *Euglena gracilis* (SAG 1224-5/25); SAFA = saturated fatty acids, MUFA = mono unsaturated fatty acids, PUFA = poly unsaturated fatty acids, UFA = unidentified fatty acids.

| | Type 1 | Type 2 |
|---|---|---|
| Protein | 24% | 11% |
| Carbohydrates | ± 65% | ± 35% |
| Lipids total | 10.4% | 51% |
| *SAFA* | *46.8%* | *20.1%* |
| *MUFA* | *4%* | *0.7%* |
| *PUFA* | *24.4%* | *60.4%* |
| *Omega-3* | *1.9%* | *38.5%* |
| *Omega-6* | *22.6%* | *21.9%* |
| *UFA* | *28.4%* | *18.5%* |

*In vitro* batch rumen incubations were performed according to Van Ranst *et al.* (Van Ranst G., Fievez V., Vandewalle M., Van Waes C., De Riek J., and Van Bockstaele E., (2010), "Influence of damaging and wilting red clover on lipid metabolism during ensiling and in vitro rumen incubation", Animal, 4:9, pp. 1528-1540) by the Laboratory for Animal Nutrition and Animal Product Quality (Lanupro), Ghent University, Belgium. The results are presented in Table 3, which shows the total short chain fatty acids (SCFA), CH₄, and ARDOM (apparently *in vitro* rumen degradable organic matter) in type 1 (non-stressed) and type 2 (stressed during an additional 5 days anoxia incubation period) of *Euglena gracilis* biomass after 24h of *in vitro* incubation.

**Table 3: The total SCFA, CH₄, and ARDOM in type 1 (non-stressed) and type 2 (stressed during an additional 5 days anoxia incubation period) of Euglena gracilis biomass after 24h of in vitro incubation.**

| | | Type 1 | Type 2 |
|---|---|---|---|
| Total SCFA | (µmol/incubation) | 1196 | 478 |
| acetic acid | | 623 | 289 |
| propionic acid | | 349 | 97 |
| isobutyric acid | | 21.7 | 13.8 |
| butyric acid | | 142 | 46 |
| isovaleric acid | | 33.8 | 21.5 |
| valeric acid | | 25.9 | 10.3 |
| ARDOM | g/g substrate | 0.41 | 0.15 |
| Methane (CH₄) | µmol/incubation | 202 | 93 |

Short chain fatty acids (SCFA) are fermentation products from glycolysis and subsequent fermentation of carbohydrates and fermentation of amino acids by ruminant microbes. The SCFA formed at fermentation is quantitatively and qualitatively influenced by the type and amount of carbohydrate substrate. Table 3 shows that the total SCFA produced during *in vitro* incubations is reduced by 60% for type 2 biomass as compared to type 1 biomass.

Acetic acid is the main precursor for milk fat synthesis so the production of adequate levels of acetate in the rumen is essential to maintain adequate quantities of milk fat. Usually, acetic acid constitutes 50 to 60 percent of the total SCFA and this is met by both type I (52.1%) and type II (60.4%) biomass. Propionic acid is used in lactose or milk sugar synthesis and usually makes up 18 to 20 percent of the total SCFA. Type I biomass is somewhat higher, e.g. 29.2%, but type 2 is practically within this range (20.3%). Butyric acid provides energy to the rumen wall and makes up 12 to 18 percent of the total SCFA, which is nearly met by both type 1 and 2 (11.8 and 9.6 % respectively), both under 12%.

The higher percentage of acetic acid in type 2 (66.9% of the main 3 SCFA's) in comparison with type 1 (55.9%), and the lower percentage of propionic acid of type 2 (22.4%) in comparison with type 1 (31.3%) show that the EPS surrounding the type 2 biomass are metabolized as a carbohydrate comparable to cellulose and hemicellulose. Despite the possible break up of EPS in the rumen, the inventors presently believe that the EPS mucus layer surrounding the type 2 cells protects the cell biomass against ruminal degradation.

High intake of oil usually results in a reduction of methane, which is also observed in the high oil biomass type 2. Without wishing to be bound by theory, a possible mechanism could be that the oil serves as an alternative hydrogen sink, which leads to an increased production of trans fatty acids. Since the oils in biomass type 2 are not digested in the rumen, such alternative hydrogen sink is not provided. The methane reduction is more likely to be attributed to the large amount of available carbohydrate (non-cellulose insoluble polysaccharide).

However this reduction is in general accompanied by an increase in propionic acid as well as a reduction of acetic acid (Fievez V., Boeckaert C., Vlaeminck B., Mestdagh J., and Demeyer D (2007), "In vitro examination of DHA-edible micro-algae 2. Effect on rumen methane production and apparent degradability of hay", Animal Feed Science and Technology, 136, pp. 80-95). The latter is not observed for the high lipid type 2 biomass, on the contrary. Propionic acid constitutes 31% of the main 3 SCFA's for the low lipid type 1 biomass in comparison with 22% for the high lipid type 2 biomass. Even more so, acetic acid in type 1 is 56% of the main 3 SCFA's vs. 67% in type 2 biomass, indicating that type 2 biomass resists rumen digestion in comparison with type 1.

The total SCFA production and proportions of individual SCFA's allow calculation of the ARDOM (apparently *in vitro* rumen degradable organic matter). As follows from Table 3, the ARDOM per gram substrate is 2.7 times lower for type 2 in comparison with type 1, which evidences that type 2 biomass is more resistant to rumen degradation than type 1 biomass.

### Example 2

This working example demonstrates the changes in milk composition when feeding algal biomass.

Three types of biomass were considered, the so called non-stressed (type 1) and stressed (type 2) *Euglena gracilis* biomass as well as grown *Chlorella pyrenoidosa* biomass with a cellulose cell wall, which is expected to be easily digested in the rumen. The heterotrophic grown cells (non-stressed) were exposed to an additional 5 day anoxia incubation period (stressed) resulting in a shift in cell biomass composition from carbohydrates to lipids. Furthermore, applying stress induces cyst formation accompanied by the production of a thick, protective, exopolysaccharide (EPS) mucus layer. The fatty acid composition of the biomasses tested are shown in Table 4. This specific *Euglena* biomass was not very high in PUFA indicating a stress temperature below 27 °C yet individual fatty acids of interest which are limited in cow milk are available in high quantities, e. *g.* EPA (5 to 11%) or odd-chain fatty acids. The latter are distinct components of milk. Odd chain fatty acids in milk fat are usually largely derived from bacteria in the rumen. The main odd chain fatty acids in milk are C15:0 and C17:0 (Vlaeminck B., Fievez V., Cabrita A.R.J., Fonseca A.J.M., and Dewhurst R.J (2006) Factors affecting odd- and branched-chain fatty acids in milk: A review. Animal feed science and technology 131: 389-417 )) yet in *Euglena* biomass the dominant odd chain fatty acid is C13:0 which characterizes 11-17% of total fatty acids (Table 4). The reason why *Euglena* biomass contains a relative large portion of odd chain fatty acids might be found in their strict dependency of vitamin B₁₂. Fatty acids with odd numbers of carbon atoms are produced primarily by initiating the synthetic series with propionic acid. Vitamin B₁₂ is required for the conversion of propionate into succinate for oxidation in the central energy pathways. Deficiency of vitamin B₁₂ results in accumulation of propionate and subsequent build-up of odd numbered fatty acids.

The physiological significance of odd-chain fatty acids is uncertain. There has been little attention because of technical difficulties inherent in their detection and identification. Six odd-chain fatty acids have however been detected in human milk of German mothers (1.16% of total fatty acids; C13-C21 with C15 and C17 most prominent) (Koletzko, 1988 ( Koletzko B., Mrotzek M., Eng B., and Bremer H.J. (1988) Fatty acid composition of mature human milk in Germany. The American journal of clinical nutrition. 47: 954-959 ). Recently, odd number medium chain fatty acids (C7 to C15) were reported to be superior to even-carbon MCFAs (medium chain fatty acids) in improving the cardiomyopathy of one patient with genetic LCFA (long chain fatty acid) oxidation deficiency. Beyond being readily oxidized for energy production, odd-carbon MCFAs are anaplerotic for the citric acid cycle, a process that has been shown to be crucial for maintenance of gluconeogenesis in liver, neurotransmitter synthesis in the brain, insulin signaling in ß-cells as well as optimal contraction in the heart (Labarthe et al., 2008 (Labarthe F., Gélinas R., and Des Rosiers C. (2008) Medium-chain fatty acids as metabolic therapy in cardiac disease. Cardiovasc drugs ther 22: 97-106)). Furthermore, the odd chain fatty acids in ruminant products have been of interest because of their low melting points relative to chain length, thereby influencing the melting point of milk fat.

**Table 4: Fatty acid profiles (%/100% fat) of heterotrophically grown Euglena gracilis biomass (non-stressed) followed by a 5 days anoxia period at 27°C (stressed) as well as Chlorella pyrenoidosa biomass.**

| Fatty Acid | Non-stressed biomass *Euglena Gracilis* | Stressed biomass *Euglena Gracilis* | Biomass *Chlorella pyrenoidosa* |
|---|---|---|---|
| C4:0 | | | 0.3-5.9 |
| C8:0 | <0.1 | <0,1 | 0.8-3.8 |
| C10:0 | 0.1 | <0,1 | |
| C11:0 | 0.2 | 0,1 | 0.1-1.5 |
| C12:0 | 1.3 | 0,4 | 1.0-1.5 |
| C13:0 | 10.8-17.2 | 2.5 | 0.1-0.8 |
| C14:0 | 14.0-17.2 | 3.8 | 0.3-0.7 |
| C15:0 | 4.5-5.3 | 2.0 | 0.1-0.9 |
| C15:1w5cis | 0-1.1 | 1 | 0.1-1.8 |
| C16:0 | 4.5 | 1.5-3.1 | 14.6-36.2 |
| C16:1w7cis | 0.3 | 0.3 | 1.0-3.7 |
| C17:0 | 1.1 | 0.3 | 0.2-2.1 |
| C17:1w7cis | 0.6 | 0.6 | 0-0.2 |
| C18:0 | 0.6 | 0.2 | 1.4-2.6 |
| C18:1w9cis | 0.5 | 0.7-1.2 | |
| C18:1w7cis | 0.2 | 0.5 | |
| C18:1w6cis (LA) | 0.2 | 0.3 | 2.2-19.7 |
| C18:3w3cis (ALA) | 0.2 | 0.3 | 13.8-24.0 |
| C18:4w3cis | 0.2 | 0.1 | |
| C20:1w9cis | | <0,1 | |
| C20:2w6cis | 0.3 | 1.2 | 0-0.7 |
| C20:3w6cis | 0.5 | 1.0 | |
| C20:3w3cis | <0.1 | 0.2 | |
| C20:4w6cis (AA) | 0.8-1.4 | 3.4-4.9 | |
| C20:5w3cis (EPA) | 0-4.9 | 7.9-10.3 | 0-0.4 |
| C22:0 | 0.3 | 0.7 | |
| C22:1w9cis | | | |
| C22:2w6cis | <0.1 | 0.2 | |
| C22:3w3cis | <0.1 | 0.1 | |
| C22:4w6cis | 0-10 | | |
| C22:5w6cis | 0.3 | 1.3-2.0 | |
| C22:5w3cis (DPA) | 0.3 | 0.3 | |
| C22:6w3cis | 0.3-0.7 | 0.4-1.3 | 0-0.22 |
| (DHA) | | | |
| C24:0 | 0-4.6 | <0.1 | |
| C24:1w9cis | <0.1 | 0.1 | 0-0.4 |
| UFA | 37.6-55.0 | 63.3-67.0 | 3.8-6.5 |
| SAFA | 33.3-46.8 | 12.4-13.2 | 24.7-41.0 |
| MUFA | 2.5 | 2.7-3.5 | 24.0-27.0 |
| PUFA | 9.3-13.1 | 17.5-22.0 | 36.5-43.7 |
| omega-3 | 1.1-6.3 | 9.9-11.6 | |
| omega-6 | 2.9-11.9 | 7.3-10.1 | |
| ω-6:ω-3 | 0.5-10.8 | 0.74-0,87 | |
| Trans | 0 | 0.2 | |
| Total fat (%) | 9-15 | 40-55 | 7-12.5 |

The composition of *Euglena* biomass can be manipulated by choice of growth conditions, nutrients, nutrient limitation and applying stresses subsequent to a period of optimal growth. This will result in a typical fatty acid profile within the ranges given in Table 5. When supplementing ruminant feed with algal biomass, additions of up to 2 kg algal biomass per day are preferred, but supplemention may also be higher. In this example full and direct transfer of fatty acids from the feed is assumed. This leads to a maximum increase of one or more fatty acids in ruminant milk. The increases and decreases, if the fatty acid content is g/100 g fat, is given in Table 6 for the individual fatty acids. It should be noted that these increases and decreases are on top of the native fatty acid contents and in practice not all fatty acids will be increased or decreased to this (absolute) maximum level.

**Table 5: Range of fatty acid composition of Euglena gracilis biomass.**

| Fatty Acid | *Euglena gracilis* |
|---|---|
| C4:0 | 0-0.2 |
| C8:0 | <0.1-0.1 |
| C10:0 | <0.1-0.6 |
| C11:0 | 0.1-0.7 |
| C12:0 | 0.3-3.3 |
| C13:0 | 2.3-17.2 |
| C14:0 | 2.7-19.7 |
| C15:0 | 2.0-5.3 |
| C15:1w5cis | 0-1.1 |
| C16:0 | 1.0-4.5 |
| C16:1w7cis | 0.1-0.8 |
| C17:0 | 0.3-1.1 |
| C17:1w7cis | 0.3-1.2 |
| C18:0 | 0.1-0.7 |
| C18:1w9cis | 0.2-1.8 |
| C18:1w7cis | 0-0.9 |
| C18:1w6cis (LA) | 0-0.6 |
| C18:3w3cis (ALA) | <0.1-0.5 |
| C18:4w3cis | 0-0.2 |
| C20:1w9cis | 0-<0.1 |
| C20:2w6cis | 0.2-2.1 |
| C20:3w6cis | 01.8 |
| C20:3w3cis | 0-0.4 |
| C20:4w6cis (AA) | 0.4-7.7 |
| C20:5w3cis (EPA) | 0-15.1 |
| C22:0 | 0.3-1.2 |
| C22:1w9cis | 0-0.3 |
| C22:2w6cis | 0-0.3 |
| C22:3w3cis | 0-1.3 |
| C22:4w6cis | 0-20.8 |
| C22:5w6cis | 0.1-2.8 |
| C22:5w3cis (DPA) | 0-23.2 |
| C22:6w3cis (DHA) | <0.1-1.3 |
| C24:0 | 0-11.9 |
| C24:1w9cis | 0-0.1 |
| UFA | 12.8-67.0 |

**Table 6: Fatty acid profile of milk without any feed additives (control) and increases against this reference for individual fatty acids by feeding up to 20% of total feed intake non-stressed Euglena gracilis biomass or stressed Euglena gracilis biomass.**

| Fatty Acid | No feed additives | Non-stressed biomass *Euglena* | | Stressed biomass *Euglena* | |
|---|---|---|---|---|---|
| | | increase | decrease | increase | decrease |
| C4:0 | 3.2 | | 0-1 | | 0-1 |
| C8:0 | 1.1 | | 0-1 | | 0-1 |
| C10:0 | 3.6 | | 0-1 | | 0-1 |
| C11:0 | 0.2 | | | | |
| C12:0 | 3.9 | | 0-1 | | 0-1 |
| C13:0 | 0.19 | 0-4 | | 0-1 | |
| C14:0 | 11.4 | 0-2 | | | 0-2 |
| C15:0 | 2.1 | 0-1 | | | |
| C15:1w5cis | | 0-1 | | 0-1 | |
| C16:0 | 25.9 | | 0-5 | | 0-6 |
| C16:1w7cis | | 0-1 | | 0-1 | |
| C17:0 | 0.6 | 0-1 | | | |
| C17:1w7cis | 0.36 | 0-1 | | 0-1 | |
| C18:0 | 10.9 | | 0-2 | | 0-2 |
| C18:1w9cis | 20.23 | | 0-4 | | 0-4 |
| C18:1w7cis | | 0-1 | | 0-1 | |
| C18:1w6cis (LA) | | 0-1 | | 0-1 | |
| C18:3w3cis (ALA) | | 0-1 | | 0-1 | |
| C18:4w3cis | 0.01 | 0-1 | | 0-1 | |
| C20:1w9cis | 1.0 | | 0-1 | | 0-1 |
| C20:2w6cis | | 0-1 | | 0-1 | |
| C20:3w6cis | 0.32 | 0-1 | | 0-1 | |
| C20:3w3cis | 0.07 | | | 0-1 | |
| C20:4w6cis (AA) | 0.08 | 0-1 | | 0-2 | |
| C20:5w3cis (EPA) | 0.01 | 0-2 | | 0-3 | |
| C22:0 | 0.14 | 0-1 | | 0-1 | |
| C22:1w9cis | 0.05 | | | | |
| C22:2w6cis | 0.2 | | | | |
| C22:3w3cis | 0.06 | | | | |
| C22:4w6cis | 0.04 | 0-3 | | 0-5 | |
| C22:5w6cis | 0.07 | 0-1 | | 0-1 | |
| C22:5w3cis (DPA) | 0.03 | 0-1 | | 0-5 | |
| C22:6w3cis (DHA) | | 0-1 | | 0-1 | |
| C24:0 | 0.06 | 0-2 | | 0-3 | |
| C24:1w9cis | 0.01 | | | | |

## Claims

1. Process for supplementary feeding of animals, comprising offering for oral take-up of or orally applying an amount of *Euglenida* biomass by a caretaker to an animal.

2. Process for adjusting the milk composition of a mammal, comprising consuming by said mammal of an amount of *Euglenida* biomass.

3. The process according to claim 1 or 2, wherein the biomass comprises *Euglenida* including extracellular mucus layer.

4. The process according to claim 1, 2 or 3, wherein the biomass is purified.

5. The process according to one or more of the preceding claims, wherein the amount forms 0.05-20, preferably 0.1-10, more preferably 0.3-5 wt.% of the total dry weight amount orally appliable or consumable feed.

6. The process according to any one or more claims of claim 1 and the claims depending on claim 1, wherein the animal is kept for the production of milk, is a ruminant, or preferably is a ruminant kept for the production of milk.

7. The process according to any one or more claims of claim 2 and the claims depending on claim 2, wherein the mammal is an animal kept for the production of milk, or is a lactating woman.

8. Use of *Euglenida* biomass in an amount of at least 0.05 wt.% drawn on the total dry daily amount of consumable feed for a ruminant, for reducing the production of methane by said ruminant.

9. Use of *Euglenida* biomass in an amount of at least 0.05 wt.% drawn on the total dry daily amount of consumable feed for a milk producing animal without reduction in the milk production by said animal.
